# EUROPÄISCHE PATENTSCHRIFT

(11) **EP 4 127 494 B1**
(45) Veröffentlichungstag und Bekanntmachung des Hinweises auf die Patenterteilung: **18.06.2025**
(21) Anmeldenummer: 21716259.3
(22) Anmeldetag: 11.03.2021
(51) Int. Cl.: F16B 9/00, F16B 33/00, F16B 37/08, H02G 3/06, H02G 15/04, F16B 37/12

(54) **DRUCKMUTTER**
RETAINING NUT
ÉCROU DE RETENUE

(30) Priorität: 02.04.2020 DE 102020002123
(43) Veröffentlichungstag der Anmeldung: 08.02.2023
(73) Patentinhaber: BizLink Industry Germany GmbH, 91154 Roth (DE)
(72) Erfinder: KNAUER, Philipp, 96170 Lisberg (DE); LEHMANN, Peter, 91720 Absberg (DE)
(74) Vertreter: FDST Patentanwälte
(86) Internationale Anmeldenummer: PCT/DE2021/000046
(87) Internationale Veröffentlichungsnummer: WO 2021/197526

(56) Entgegenhaltungen:
- EP-A2- 0 146 156
- CN-A- 107 592 949
- DE-C1- 4 225 263

## Beschreibung

Die Anmeldung geht aus von einer Druckmutter.

Derartige Druckmuttern werden für Kabelverschraubungen benötigt. Dabei wird ein Kabel durch eine Durchführung und/oder Hülse geführt an welcher das Kabel befestigt werden soll. Die Befestigung des Kabels ist oft mit dem gleichzeitigen Abdichten des Kabels kombiniert. Die Druckmutter wird benötigt um mittels einer Dichtung, eines Klemmteiles oder einer Hülse das Kabel mit oder an der Durchführung zu fixieren und/oder abzudichten.

Druckmuttern weisen meist eine stufenförmige oder konisch zulaufende Innenseite auf, an welcher ein Klemmteil oder eine Dichtung geklemmt oder zusammengepresst wird. Dabei wird die Druckmutter mit einem Grundteil der Kabelverschraubung verschraubt. Die Dichtung, Hülse oder das Klemmteil, welches zwischen Grundteil und Druckmutter angeordnet ist, wird dabei radial nach innen komprimiert. Durch die Komprimierung wird das durchgeführte Kabel kraftschlüssig fixiert. Oft wird so auch eine umweltdichte Verbindung ermöglicht.

Aus dem Stand der Technik ist eine Vielzahl von Kabelverschraubungen und Druckmuttern für dergleichen bekannt. Bei der Montage einer Kabelverschraubung wird zuerst die Druckmutter auf das Kabel geschoben, dann die Dichtung oder das Klemmteil, gefolgt von einem Verschraubungs-Grundkörper. Oft ist die Dichtung oder das Klemmteil bereits im Grundkörper enthalten oder integral mit diesem verbunden.

Für spezielle Anwendung, besonders dort, wo sehr viele Umwelteinflüsse negativ auf die Kabelverschraubung einwirken, sind besondere Maßnahmen geboten. Dafür wird oft die Dichtung als integraler Bestandteil auf das Kabel aufgebracht. Dafür wird beim Konfektionieren des Kabels eine sogenannte Kabeltülle auf das Kabel aufgespritzt oder an diesem festgeklebt. Die Kabeltülle hat dabei verschiedene Aufgaben. Einerseits bildet sie die Dichtung. Durch das Aufspritzen oder Aufkleben auf dem Kabel wird so eine besonders umweltdichte Verbindung hergestellt. Andererseits ist so eine bessere mechanische Fixierung des Kabels in der Kabelverschraubung möglich. Gleichzeitig ist die Kabeltülle oft etwas länger ausgeführt und dient so noch als Knickschutz für das Kabel. Vor allem im Bereich der Kabelverschraubung wirken starke Kräfte auf ein Kabel und so kann es schnell zum Abknicken des Kabels führen. Ein solcher Knickschutz verhindert dies.

Nachteilig bei den aus dem Stand der Technik bekannten Lösungen für Kabelverschraubungen ist die Montagereihenfolge. Demnach gibt es Einbausituationen, in welchen die bekannte Reihenfolge der Montage nicht möglich ist. Dies ist vor allem dann der Fall, wenn die Einbausituation sich derart gestaltet, dass das Kabel, samt Verschraubung und Kabeltülle durch eine enge Öffnung geführt werden muss. Da die Druckmutter der Kabelverschraubung jedoch vor dem Aufspritzen der Kabeltülle auf das Kabel geschoben werden muss, passt diese nicht mehr durch eine Öffnung die kleiner als die Druckmutter selber ist.

Auch für diesen Anwendungsfall gibt es im Stand der Technik bereits Lösung. Diese sehen z.B. Druckmuttern vor, die aus zwei halben Muttern bestehen und mittels eines Bajonett-Mechanismus nachträglich um das Kabel angeordnet werden können. Nachteilig bei dieser Art von Druckmuttern ist jedoch, dass diese keine großen mechanischen Kräfte aufnehmen können. Dies wirkt sich vor allem in Bereichen mit hoher Umwelteinfluss-Belastung negativ aus. Zwar können Kabelverschraubungen mit derartigen Druckmuttern nachträglich angebracht werden, erfüllen jedoch nicht die nötigen Anforderungen an mechanischer Belastbarkeit und Dichtheit. Eine Druckmutter des Standes der Technik wird in DE 42 25 263 C1 gezeigt.

### Aufgabenstellung

Die Aufgabe der vorliegenden Erfindung besteht darin eine Druckmutter für eine Kabelverschraubung vorzustellen, welche für den Einsatz bei sehr engen Kabeldurchführungen geeignet ist. Dabei soll die Druckmutter hohe mechanische Belastungen standhalten. Gleichzeitig muss die Druckmutter durch eine enge Öffnung passen und auch eine Montage ermöglichen, wenn bereits eine Kabeltülle oder ein Knickschutz auf einem Kabel angebracht ist.

Die Aufgabe wird durch die Merkmale des Gegenstands des unabhängigen Anspruchs 1 gelöst.

Vorteilhafte Ausgestaltungen der Erfindung sind in den Unteransprüchen angegeben.

Bei der Erfindung handelt es sich um eine Druckmutter für eine Kabelverschraubung. Die Druckmutter ist dafür vorgesehen mit einem, mit der Druckmutter zusammenwirkenden Grundkörper einer Kabelverschraubung auf ein Klemm- oder Dichtteil einzuwirken. Dabei wird das Klemm- oder Dichtteil zwischen der Druckmutter und dem Grundkörper derart gepresst, dass das Klemm- oder Dichtteil eine radial, nach innen gerichtete Kraft ausübt. Die radial, nach innen gerichtete Kraft des Klemm- oder Dichtteils ist dafür vorgesehen, ein durch die Kabelverschraubung geführtes Kabel mechanisch zu fixieren und/oder abzudichten.

Die Druckmutter weist im Wesentlichen eine kreisrunde Außenfläche auf, wobei auch eine eckige Gestaltung möglich wäre. Eine Durchgangsöffnung bildet eine Innenfläche. Die Innenfläche ist zweckmäßig zylindrisch ausgebildet und weist ein erstes Innengewinde auf. Mittels des ersten Innengewindes kann die Druckmutter auf einen Grundkörper der Kabelverschraubung aufgeschraubt werden. Dafür kann an einer Einschraubseite ein Grundkörper einer Kabelverschraubung in das erste Innengewinde der Druckmutter eingeschraubt werden.

Der Einschraubseite gegenüber bildet die Druckmutter eine Durchführungsseite, welcher zur Aufnahme und Durchführung eines Kabels ausgebildet ist. Ein derartiges Kabel kann in der Durchführungsseite in die Druckmutter eingeführt und bis zur Einschraubseite durch die Druckmutter hindurchgeführt werden.

Zweckmäßig ist an der Einschraubseite der Druckmutter ein erster Innendurchmesser vorgesehen, welcher gleichzeitig den Durchmesser des ersten Innengewindes bildet, wobei auf der Durchführungsseite der Druckmutter ein zweiter Innendurchmesser vorgesehen ist. Dabei ist der zweite Innendurchmesser kleiner als der erste Innendurchmesser ausgebildet.

Gemäß der Erfindung ist im Bereich zwischen dem ersten Innendurchmesser und dem zweiten Innendurchmesser ein Pressbereich vorgesehen. Der Pressbereich ist dabei nicht als Stufe zwischen dem ersten Innendurchmesser und dem zweiten Innendurchmesser ausgebildet, sondern folgt einem konischen Verlauf. D.h. die Innenfläche der Druckmutter läuft im Pressbereich vom ersten Innendurchmesser konisch zum zweiten Innendurchmesser zu.

Diese Ausführung der Druckmutter ermöglicht eine besonders vorteilhafte Kraftübertragung auf ein in der Druckmutter angeordnetes Klemm- oder Dichtteil. Durch den konischen Pressbereich kann günstig eine radial nach innen gerichtete Kraft auf das Klemm- oder Dichtteil ausgeübt werden. Je besser diese Kraft auf ein Klemm- oder Dichtteil ausgeübt wird, desto besser kann ein Kraftschluss zum Kabel erzeugt werden. Zudem wirkt sich dies besser auf die Dichtigkeit der Kabelverschraubung zum Kabel aus.

Erfindungsgemäß ist die Druckmutter zweiteilig ausgebildet. Dabei besteht die Druckmutter aus einem Grundkörper und einem Ring. Der Ring ist so in den Grundkörper einsetzbar, dass der Grundkörper den Ring zumindest bereichsweise umfasst. Die Innenfläche bildet dabei am Grundkörper eine erste Innenfläche und am Ring eine zweite Innenfläche. In einer besonders bevorzugten Ausführungsform ist der Ring vollständig im Grundkörper aufgenommen. Zweckmäßig ist der Ring auf der Durchführungsseite in den Grundkörper einsetzbar.

Damit Grundkörper und Ring eine feste Verbindung miteinander ermöglichen, ist am Ring ein Außengewinde eingeformt, welches sich um den Ring herum ausbildet. Das Außengewinde ist zum Einschrauben in ein zweites Innengewinde vorgesehen. Das zweite Innengewinde ist zweckmäßig an der Durchführungsseite der Druckmutter im Grundkörper eingeformt. So kann der Ring an der Durchführungsseite in den Grundkörper der Druckmutter eingeschraubt werden.

Eine weitere Ausführungsform sieht vor, das Außengewinde des Rings und das zweite Innengewinde des Grundkörpers gegen eine andere Möglichkeit zur Verrastung zu ersetzen. So ist auch eine Arte Bajonett-Verschluss möglich. Dafür würde der Ring mit Rastnasen und der Grundkörper mit Ausnehmungen versehen werden. Durch Einsetzen der Rastnasen in die Ausnehmungen des Grundkörpers bei gleichzeitigem Verdrehen von Grundkörper und Ring zueinander kann ebenfalls eine Verbindung ermöglicht werden.

In einer speziellen Ausführungsform der Erfindung sind das erste Innengewinde und das zweite Innengewinde als ein einziges, sich durch den Grundkörper erstreckendes Gewinde ausgebildet. D.h. dass das Gewinde sich von der Einschraubseite als erstes Innengewinde bis zur Durchführungsseite als zweites Innengewinde erstreckt. In dieser Ausführungsform haben das erste Innengewinde und das zweite Innengewinde zweckmäßig dieselbe Größe und Steigung.

Die Erfindung sieht vor, dass der erste Innendurchmesser der Druckmutter am Grundkörper und der zweite Innendurchmesser am Ring angeordnet sind. Durch diese besonders vorteilhafte Anordnung des ersten und zweiten Innendurchmessers ist eine besonders günstige Montage der Druckmutter auf einem Kabel möglich. Es ermöglicht, dass das Kabel mit dem bereits auf dem Kabel angeordneten Ring in Bereichen verlegt und installiert werden kann, welche für die gesamte Druckmutter zu eng sind.

So kann ein Kabel mit Ring durch Öffnungen geführt werden, die nur minimal größer sind als der Ring selber. D.h. die Öffnung muss nur etwas größer als der erste Innendurchmesser der Druckmutter sein. Beispielsweise kann so ein Kabel mit einer Kabeltülle versehen werden, welche gleichzeitig als Klemm- und Dichtteil wirkt. Durch vorheriges Aufschieben des Rings auf das Kabel, wird der Ring durch die Kabeltülle auf dem Kabel gehalten. Sowohl Ring, als auch Kabeltülle entsprechen dabei maximal dem ersten Innendurchmesser der Druckmutter. Das Kabel kann mit dem darauf angeordneten Ring und Kabeltülle verlegt und/oder durch Öffnungen geschoben werden, die lediglich etwas mehr Platz bieten, als der erste Innendurchmesser.

Nach Installation des Kabels mit Kabeltülle und Ring kann der Grundkörper der Druckmutter, welcher größer ist als der erste Innendurchmesser über das Kabel und die Kabeltülle geschoben werden. Hinter der Kabeltülle wird durch Einschrauben des Rings in den Grundkörper die Druckmutter so hinter der Kabeltülle auf dem Kabel fixiert. Ein Verschrauben der Druckmutter mit einem Gegenstück einer Kabelverschraubung ist so möglich, wobei gleichzeitig die Kabeltülle zwischen Gegenstück und Druckmutter fixiert und gehalten wird.

Zum besseren Aufschrauben der Druckmutter auf einem Gegenstück einer Kabelverschraubung ist ferner vorgesehen auf der Außenfläche der Druckmutter zumindest einen Betätigungsbereich auszubilden. Bevorzugt verfügt die Druckmutter auf ihrer Außenseite über zwei, vier oder sechs Betätigungsbereiche. Diese sind zur Betätigung der Druckmutter mit einem Werkzeug, z.B. einem Gabelschlüssel oder einer Zange vorgesehen. Durch die über den Umfang der Druckmutter regelmäßig verteilten Betätigungsbereiche ist ein formschlüssiges Greifen und Betätigen der Druckmutter möglich. So kann eine Kraft, bevorzugt ein Moment auf die Druckmutter übertragen werden und diese auf einem Gegenstück einer Kabelverschraubung befestigt oder von dieser gelöst.

Eine weitere bevorzugte Ausführungsform sieht vor, dass am Ring, welcher in den Grundkörper der Druckmutter einschraubbar ist, zumindest ein zweiter Betätigungsbereich vorgesehen ist. Der zweite Betätigungsbereich am Ring dient dazu, eine Kraft, bevorzugt ein Moment, auf den Ring auszuüben und diesem so in den Grundkörper der Druckmutter einzuschrauben. Der zweite Betätigungsbereich kann dabei als Schlitz zur Nutzung eines Schraubendrehers, als Flächen zur Nutzung eines Gabelschlüssels oder z.B. eines Innensechskantschlüssels, oder auf einer andere, dem Fachmann aus dem Stand der Technik bekannten Art von Betätigungsbereichen ausgebildet sein.

### Ausführungsbeispiel

Ein Ausführungsbeispiel der Erfindung ist in den Zeichnungen dargestellt und wird im Folgenden näher erläutert. Es zeigen:
- Fig. 1a: eine perspektivische Darstellung einer erfindungsgemäßen Druckmutter;
- Fig. 1b: eine Schnittdarstellung der erfindungsgemäßen Druckmutter;
- Fig. 2a: eine weitere perspektivische Darstellung der erfindungsgemäßen Druckmutter;
- Fig. 2b: eine weitere Schnittdarstellung der erfindungsgemäßen Druckmutter;
- Fig. 3: eine Schnittdarstellung der erfindungsgemäßen Druckmutter auf einem Gegenstück einer Kabelverschraubung;
- Fig. 4: eine Schnittdarstellung einer aus dem Stand der Technik bekannten Druckmutter auf einem Gegenstück einer Kabelverschraubung;
- Fig. 5: eine Schnittdarstellung der erfindungsgemäßen Druckmutter, montiert mit einem Kabel, einer Kabeltülle und einem Gegenstück einer Kabelverschraubung;
- Fig. 6a: eine perspektivische Einbausituation der erfindungsgemäßen Druckmutter; und
- Fig. 6b: die Einbausituation aus der Figur 6a in einer Schnittdarstellung.

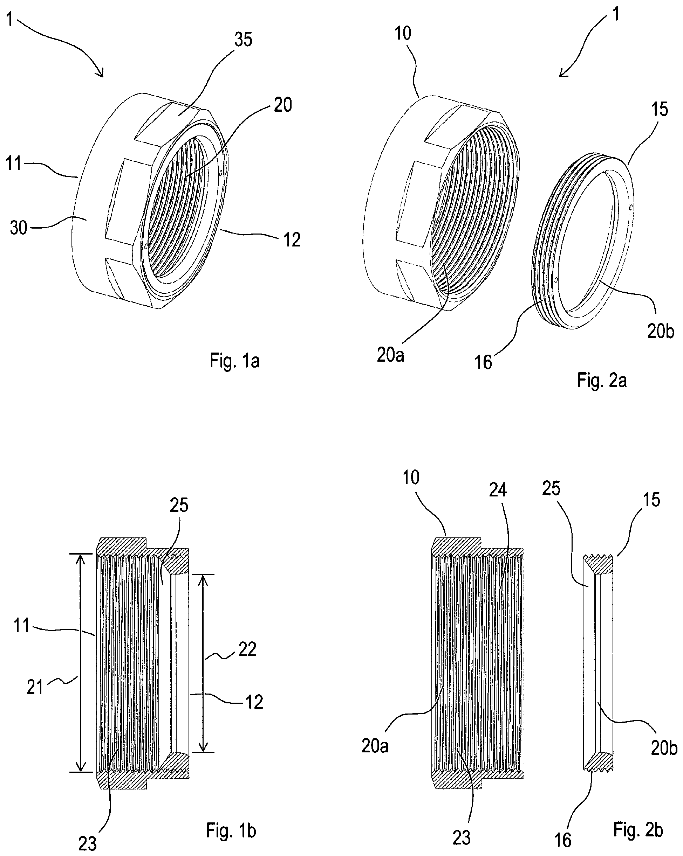

Die Figur 1a zeigt eine perspektivische Darstellung einer erfindungsgemäßen Druckmutter 1. Die Druckmutter 1 ist ringförmig ausgebildet und verfügt über eine Innenfläche 20 sowie eine Außenfläche 30. Die in der Druckmutter 1 liegende Innenfläche 20 ist von einer Einschraubseite 11 - in der Darstellung rückseitig liegend - und einer Durchführungsseite 12 zugänglich. Die Ansicht der Figur 1a ermöglich den die Sicht über die Durchführungsseite 12 auf die Innenfläche 20 der Druckmutter 1.

An der Außenfläche 30 der Druckmutter 1 sind sechs, über den Umfang der Druckmutter 1 verteilte, erste Betätigungsbereiche 35 angeordnet. Die Betätigungsbereiche 35 sind so an der Druckmutter 1 vorgesehen, dass mittels eines Gabel- oder Ringschlüssels, oder auch mittels einer Zange eine Kraft auf die Druckmutter 1 ausgeübt werden kann. Die Kraft, welche zweckmäßig als Moment auf die Druckmutter 1 einwirkt, ist zum Auf- oder Abschrauben der Druckmutter 1 auf ein Gegenstück einer Kabelverschraubung dienlich.

Die aus der Figur 1a bekannte Druckmutter 1 ist in der Figur 1b in einer Schnittdarstellung gezeigt. An der links dargestellten Einschraubseite 11 weist die Druckmutter 1 an ihrer Innenfläche 20 einen ersten Innendurchmesser 21 auf. An der, der Einschraubseite 11 gegenüberliegenden, Durchführungsseite 12 weist die Druckmutter 1 einen zweiten Innendurchmesser 22 auf. Dabei ist der zweite Innendurchmesser 22 kleiner als der erste Innendurchmesser 21.

Im Bereich, in welchem der erste Innendurchmesser 21 in den zweiten Innendurchmesser 22 übergeht, bildet die Innenfläche 20 einen Pressbereich 25. Der Pressbereich 25 läuft dabei konisch zu. D.h. dass der erste Innendurchmesser 21 einen breitesten Durchmesser des konischen Pressbereichs 25 bildet, während der zweite Innendurchmesser 22 einen schmalsten Durchmesser des konischen Pressbereichs 25 bildet.

Im links dargestellten Bereich der Innenfläche 20 ist dieser ein erste Innengewinde 23 eingeformt. Dabei bildet der freie Innendurchmesser des ersten Innengewindes 23 den ersten Innendurchmesser 21. Das erste Innengewinde 23 ist dabei zur Einschraubseite 11 der Druckmutter 1 offen. Über die Einschraubseite 11 kann so ein Gegenstück einer Kabelverschraubung in die Druckmutter 1 eingebracht werden. Dabei wirkt ein am dem Gegenstück vorgesehenes Außengewinde mit dem ersten Innengewinde 23 der Druckmutter 1 so zusammen, dass die Druckmutter 1 auf dem Gegenstück verschraubbar ist.

In der Figur 2a ist eine weitere perspektivische Darstellung des Druckmutter 1 aus gleicher Ansicht wie in Figur 1a gezeigt. Die Figur 2a zeigt die Druckmutter 1 jedoch in einer Explosionsansicht, dass die Einzelteile der Druckmutter 1 separat dargestellt sind. Dabei ist im linken Bereich der Figur 2a ein Grundköper 10 und im rechten Bereich ein Ring 15 gezeigt. Der Ring 15 verfügt an seiner äußeren Fläche über ein Außengewinde 16. Mittels des Außengewindes 16 ist der Ring 15 so in den Grundkörper 10 einschraubbar. Grundkörper 10 und Ring 15 bilden zusammen die Druckmutter 1.

Eine Schnittdarstellung der in Figur 2a gezeigten Druckmutter 1 mit separiertem Grundkörper 10 und Ring 15 ist in der Figur 2b gezeigt. Dargestellt erstreckt sich die Innenfläche 20 sowohl über den Grundkörper 10, in welchem sie eine erste Innenfläche 20a bildet, als auch über den Ring 15, in welchem sie eine zweite Innenfläche 20b bildet. Die Innenfläche 20a im Grundkörper 10 aus dem ersten Innengewinde 23 und einem zweiten Innengewinde 24 gebildet. Dabei ist das zweite Innengewinde 24 im Bereich der Durchführungsseite 12 in den Grundkörper 10 eingeformt. In diesem speziellen Ausführungsbeispiel sind das erste Innengewinde 23 und das zweite Innengewinde 24 gleich ausgebildet. Das erste Innengewinde 23 und das zweite Innengewinde 24 gehen somit einander über. Hier sind auch Ausführungsformen denkbar, bei welchen das erste Innengewinde 23 und das zweite Innengewinde 24 unterschiedliche Dimensionen, Steigungen oder Größen aufweisen.

Der Pressbereich 25 der Druckmutter 1 ist in dem dargestellten Ausführungsbeispiel zweckmäßig auf der zweiten Innenfläche 20b vorgesehen, welche am Ring 15 ausgebildet ist. Dabei ist der Pressbereich 25 als Fase an der Innenseite des Rings 15 vorgesehen. Wenn der Ring 15 in den Grundkörper 10 eingeschraubt ist, bildet die Fase entsprechend den konischen Pressbereich 25, welcher den ersten Innendurchmesser 21 mit dem zweiten, kleineren Innendurchmesser 22 verbindet, wie in Figur 1b gezeigt.

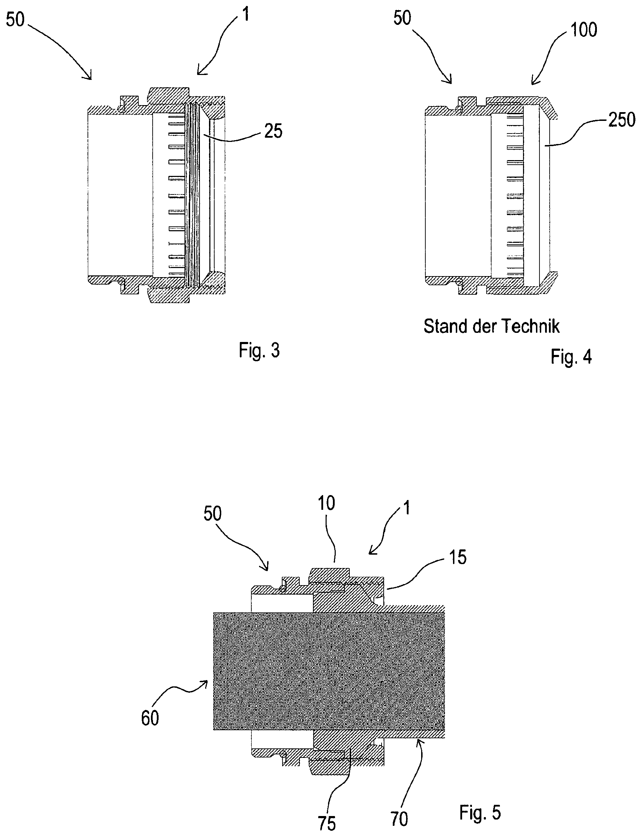

Die Druckmutter 1 der Figur 1a/b ist zusammen mit einem Gegenstück 50 einer Kabelverschraubung in der Figur 3 in einer Schnittdarstellung gezeigt. Im rechten Bereich ist die Druckmutter 1 dargestellt, während im linken Bereich das Gegenstück 50 in die Einschraubseite 11 der Druckmutter 1 ragt. Zweckmäßig ist dem Gegenstück 50 ein Außengewinde eingeformt, welches mit dem ersten Innengewinde 23 der Druckmutter 1 zusammenwirkt.

Das Gegenstück 50 weist, wie aus dem Stand der Technik bekannt, neben dem Außengewinde zum Aufschrauben der Druckmutter 1 noch einen Flansch und ein zweites Gewinde auf. Mittels des zweiten Gewindes, hier links des Flansches angedeutet, kann das Gegenstück in einem Durchbruch einer Montagefläche aufgenommen und an dieser Montagefläche fixiert werden. Je nach Anwendung kann die Montagefläche ein Steckverbindergehäuse, eine Gerätewand, ein Motor oder eine sonstige Maschine sein. Anwendungen, bei welchen ein Kabel mechanisch fest mit einer Montagefläche verbunden werden muss, sind viele denkbar und bekannt.

Gut erkennbar ist in der Figur 3 auch der Bereich zwischen dem Pressbereich 25 der Innenfläche 20 und dem Gegenstück 50. Dieser Spalt zwischen Druckmutter 1 und Gegenstück 50 ist zur Aufnahme eines Dichtteils vorgesehen. Das Dichtteil wird dabei zwischen einer Stirnseite des Gegenstücks 50 und des Pressbereichs 25 so eingeklemmt und gepresst, dass es durch elastische Verformung eine radial nach innen gerichtete Kraft ausübt. Ein im Dichtteil aufgenommenes Kabel kann so mechanisch und umweltdicht verklemmt werden. Die nötige Kraft für ein Verklemmen zwischen der Druckmutter 1 und dem Gegenstück 50 wird durch das Zusammenwirken des ersten Innengewindes 23 der Druckmutter und dem Außengewinde des Gegenstücks 50 erzeugt.

In der Figur 4 ist im Vergleich zur erfindungsgemäßen Druckmutter 1 eine aus dem Stand der Technik bekannt Druckmutter 100 mit einem Gegenstück 50 dargestellt. Erkennbar ist, dass die Druckmutter 100 einteilig ausgebildet ist. Der Pressbereich 250 ist integraler Bestandteil der einteiligen Druckmutter. Dadurch muss eine Durchführung, durch welche die Druckmutter 100 geführt werden kann, zumindest den Außenmaßen der Druckmutter 100 entsprechen oder größer sein. Bei der erfindungsgemäßen Druckmutter 1 hingegen kann der Ring 15 vom Grundkörper 10 getrennt werden, wodurch eine Durchführung auch dem ersten Innendurchmesser 21 entsprechen kann.

Die vollständige Einbausituation der erfindungsgemäßen Druckmutter 1 mit Gegenstück 50, einem Kabel 60 und einer Kabeltülle 70 zeigt die Figur 5 in einer weiteren Schnittdarstellung. Das Kabel 60 ist durch die Druckmutter 1 geführt. D.h. das Kabel 60 ist an der Durchführungsseite 12 in die Druckmutter 1 eingeführt und ragt an der Einschraubseite 11 wieder aus dieser heraus.

Um das Kabel 60 ist die Kabeltülle 70 angeordnet. Die Kabeltülle 70 kann dabei als separates Teil auf das Kabel 60 aufgeschoben sein. Wie dem Fachmann bekannt kann die Kabeltülle 70 jedoch auch durch z.B. einen zweiten Spritzprozess auf das Kabel 60 aufgespritzt und mit diesem dadurch verbunden sein. Für die vorliegende Erfindung hat dies keine weitere Relevanz.

Die Kabeltülle 70 verfügt über einen Dichtteil 75, welcher als Verdickung einen integralen Bestandteil der Kabeltülle 70 bildet. Das Dichtteil 75 umgibt dabei die Kabeltülle 70 vollständig. Wie auch aus dem Stand der Technik bekannt, ist das Dichtteil 75 dafür vorgesehen zwischen der Druckmutter 1 und dem Gegenstück 50 verklemmt zu werden. Durch den konischen Pressbereich 25 der Innenfläche 20 wird nicht nur eine Kraft auf das Gegenstück 50 übertragen, sondern auch eine radial nach innen gerichtete Kraft auf das Dichtteil 75 übertragen. Das elastisch ausgebildete Dichtteil 75 ist vorzugsweise aus einem Kunststoff oder Gummi gefertigt. Dies ermöglicht eine Übertragung der radialen Kraft auf das Kabel 60 und gleichzeitig eine umweltdichte Verbindung zwischen Kabel und Kabelverschraubung.

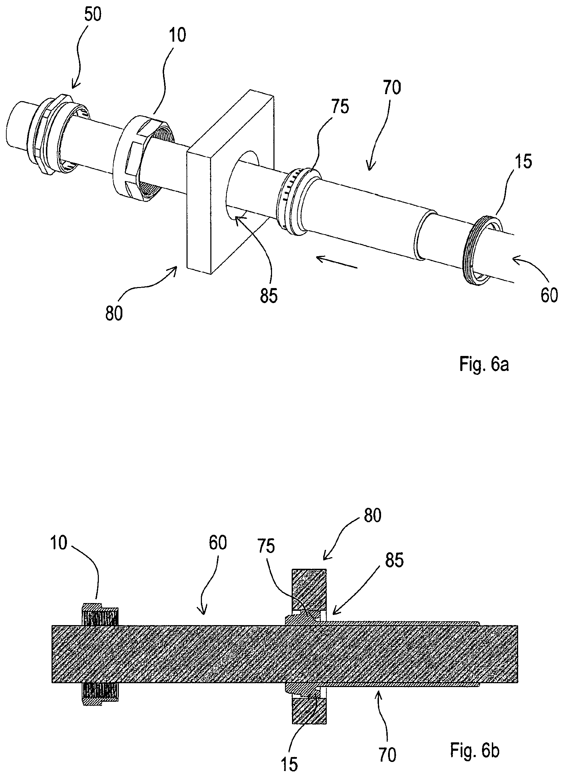

Die Einbausituation der erfindungsgemäßen Aufgabe ist in den Figuren 6a und 6b noch einmal beispielsweise dargestellt. Dabei zeigt die Figur 6a eine perspektivische Ansicht, während die Figur 6b eine Schnittdarstellung zeigt. Ausgegangen wird von einem Durchbruch 85 an einer Gehäusewand 80. Dabei ist der Durchbruch 85 so dimensioniert, dass die Druckmutter 1 nicht durch den Durchbruch 85 geführt werden kann. Produktionsbedingt wird das Kabel 60 mit bereits aufgespritzter und fest mit dem Kabel 60 verbundener Kabeltülle 70 geliefert. Da die Kabeltülle 70 bereits auf dem Kabel 60 vorhanden ist, kann keine Druckmutter 100, wie sie aus dem Stand der Technik bekannt ist, mehr auf das Kabel 60 geführt werden. Dafür ist der Dichtteil 75 des Kabeltülle 70 zu dick.

Erfindungsgemäß ist der Ring 15 bereits vor dem Aufbringen der Kabeltülle 70 auf dem Kabel 60 angeordnet worden. Bei Installation des Kabels 60 durch den Durchbruch 85 kann das Kabel 60, die Kabeltülle 70 und der Ring 15 durch den Durchbruch 85 geführt werden. Dabei werden die Komponenten von der dargestellten, rechten Seite durch den Durchbruch 85 der Gehäusewand 80 geführt.

Der Grundkörper 10, sowie das Gegenstück 50 können dann, nachträglich auf dem Kabel 60 angeordnet und mit dem Ring 15 verbunden werden. Die gesamte, fertig montierte Kabelverschraubung, bestehend aus Kabel 60, Kabeltülle 70, Druckmutter 1 und Gegenstück 50, kann in einem weiteren Schritt in einem Durchbruch an einer Montagefläche befestigt werden.

### Bezugszeichenliste

- 1 / 100: Druckmutter
- 10: Grundkörper
- 11: Einschraubseite
- 12: Durchführungsseite
- 15: Ring
- 16: Außengewinde
- 20: Innenfläche
- 20a: erste Innenfläche
- 20b: zweite Innenfläche
- 21: erster Innendurchmesser
- 22: zweiter Innendurchmesser
- 23: erstes Innengewinde
- 24: zweites Innengewinde
- 25 / 250: Pressbereich
- 30: Außenfläche
- 35: erster Betätigungsbereich
- 40 50: Gegenstück
- 60: Kabel
- 70: Kabeltülle
- 75: Dichtteil
- 80: Gehäusewand
- 85: Durchbruch
- 100: Druckmutter

## Patentansprüche

1. Druckmutter (1) für Kabelverschraubungen zur Befestigung eines Kabels (60) an einer Durchführung (85) und/oder Hülse, durch die das Kabel (60) geführt werden kann, aufweisend eine Innenfläche (20) und eine Außenfläche (30), sowie eine Einschraubseite (11) und einer Durchführungsseite (12),
wobei die Innenfläche (20) auf der Einschraubseite (11) einen ersten Innendurchmesser (21) aufweist und mit einem ersten Innengewinde (23) versehen ist,
wobei der freie Innendurchmesser des ersten Innengewindes (23) den ersten Innendurchmesser (21) bildet,
wobei die Innenfläche (20) auf der Durchführungsseite (12) einen zweiten Innendurchmesser (22) aufweist,
wobei der zweite Innendurchmesser (22) kleiner ist als der erste Innendurchmesser (21),
wobei
die Druckmutter (1) zweiteilig ausgebildet ist,
wobei die zweiteilige Druckmutter (1) aus einem Grundkörper (10) und einem Ring (15) besteht, wobei der Ring (15) in den Grundkörper (10) der Druckmutter (1) einsetzbar ist und der Grundkörper (10) den Ring (15) zumindest bereichsweise umfasst,
wobei die Innenfläche (20) am Grundkörper (10) eine erste Innenfläche (20a) bildet und am Ring (15) eine zweite Innenfläche (20b) bildet, die Innenfläche (20) in einem Pressbereich (25) zwischen dem ersten Innendurchmesser (21) und dem zweiten Innendurchmesser (22) konisch zuläuft und wobei der erste Innendurchmesser (21) am Grundkörper (10) angeordnet ist und der zweite Innendurchmesser (22) am Ring (15) angeordnet ist und der Grundkörper (10) größer ausgebildet ist als der erste Innendurchmesser (21), sodass das Kabel (60) und der Ring (15) dabei maximal dem ersten Innendurchmesser (21) entsprechen und das Kabel (60) mit dem darauf angeordneten Ring (15) und einer Kabeltülle (70) verlegt und/oder durch Öffnungen (85) geschoben werden kann.

2. Druckmutter (1) nach Anspruch 1, **dadurch gekennzeichnet, dass** der Ring (15) ein Außengewinde (16) aufweist und der Grundkörper (10) ein an der Durchführungsseite (12) angeordnetes, zweites Innengewinde (24) aufweist, wobei das Außengewinde (16) in das zweite Innengewinde (24) einschraubbar ist.

3. Druckmutter (1) nach Anspruch 2, **dadurch gekennzeichnet, dass** das zweite Innengewinde (24) und das erste Innengewinde (23) ineinander übergehen.

4. Druckmutter (1) nach einem der Ansprüche 1 bis 3, **dadurch gekennzeichnet, dass** an der Außenfläche (30) zumindest ein erster Betätigungsbereich (35) vorgesehen ist, welcher zum formschlüssigen Greifen und Drehen der Druckmutter (1) ausgebildet ist.

5. Druckmutter (1) nach einem der Ansprüche 1 bis 4, **dadurch gekennzeichnet, dass** am Ring (15) zumindest ein zweiter Betätigungsbereich vorgesehen ist, welcher zum formschlüssigen Drehen des Rings (15) ausgebildet ist.

## Claims

1. Pressure nut (1) for cable glands for fastening a cable (60) to a lead-through (85) and/or sleeve through which the cable (60) can be guided, having an inner surface (20) and an outer surface (30) and also having a screw-in side (11) and a lead-through side (12),
wherein the inner surface (20) has a first inner diameter (21), and is provided with a first internal thread (23), on the screw-in side (11),
wherein the free inner diameter of the first internal thread (23) forms the first inner diameter (21),
wherein the inner surface (20) has a second inner diameter (22) on the lead-through side (12),
wherein the second inner diameter (22) is smaller than the first inner diameter (21),
wherein the pressure nut (1) is of two-part form,
wherein the two-part pressure nut (1) consists of a main body (10) and a ring (15), wherein the ring (15) is insertable into the main body (10) of the pressure nut (1) and the main body (10) at least regionally surrounds the ring (15),
wherein the inner surface (20) forms a first inner surface (20a) on the main body (10) and forms a second inner surface (20b) on the ring (15), the inner surface (20) tapering connically in a pressing region (25) between the first inner diameter (21) and the second inner diameter (22), and wherein the first inner diameter (21) is arranged on the main body (10) and the second inner diameter (22) is arranged on the ring (15) and the main body (10) is larger than the first inner diameter (21), so that the cable (60) and the ring (15) correspond at most to the first inner diameter (21), and the cable (60), with the ring (15) arranged thereon and with a cable sleeve (70), can be routed and/or pushed through openings (85).

2. Pressure nut (1) according to Claim **1, characterized in that** the ring (15) has an external thread (16) and the main body (10) has a second internal thread (24) which is arranged on the lead-through side (12), wherein the external thread (16) is screwable into the second internal thread (24).

3. Pressure nut (1) according to Claim **2, characterized in that** the second internal thread (24) and the first internal thread (23) transition into one another.

4. Pressure nut (1) according to one of Claims 1 to 3, **characterized in that** at least one first actuation region (35) is provided on the outer surface (30) and is configured for form-fitting gripping and turning of the pressure nut (1).

5. Pressure nut (1) according to one of Claims 1 to 4, **characterized in that** at least one second actuation region is provided on the ring (15) and is configured for form-fitting turning of the ring (15).

## Revendications

1. Écrou de serrage (1) pour des presse-étoupes destinés à fixer un câble (60) au niveau d'un passage (85) et/ou d'un manchon, à travers lequel le câble (60) peut être guidé, présentant une surface interne (20) et une surface externe (30) ainsi qu'un côté vissage (11) et un côté passage (12),
la surface interne (20) présentant, sur le côté vissage (11), un premier diamètre interne (21) et étant pourvu d'un premier filetage interne (23),
le diamètre interne libre du premier filetage interne (23) formant le premier diamètre interne (21),
la surface interne (20) présentant, sur le côté passage (12), un deuxième diamètre interne (22),
le deuxième diamètre interne (22) étant inférieur au premier diamètre interne (21),
l'écrou de serrage (1) étant réalisé en deux parties,
l'écrou de serrage (1) en deux parties étant constitué d'un corps de base (10) et d'une bague (15), la bague (15) pouvant être insérée dans le corps de base (10) de l'écrou de serrage (1) et le corps de base (10) comprenant au moins en partie la bague (15),
la surface interne (20) formant, au niveau du corps de base (10), une première surface interne (20a) et, au niveau de la bague (15), une deuxième surface interne (20b), la surface interne (20) se rétrécissant de manière conique dans une zone de pressage (25) entre le premier diamètre interne (21) et le deuxième diamètre interne (22) et le premier diamètre interne (21) étant agencé au niveau du corps de base (10) et le deuxième diamètre interne (22) étant agencé au niveau de la bague (15) et le corps de base (10) étant réalisé plus grand que le premier diamètre interne (21) de telle sorte que le câble (60) et la bague (15) correspondent au maximum au premier diamètre interne (21) et que le câble (60), sur lequel sont agencés la bague (15) et un passe-câble (70), peut être posé et/ou glissé à travers des ouvertures (85).

2. Écrou de serrage (1) selon la revendication 1, **caractérisé en ce que** la bague (15) présente un filetage externe (16) et le corps de base (10) présente un deuxième filetage interne (24) agencé au niveau du côté passage (12), le filetage externe (16) pouvant être vissé dans le deuxième filetage interne (24).

3. Écrou de serrage (1) selon la revendication 2, **caractérisé en ce que** le deuxième filetage interne (24) et le premier filetage interne (23) se rejoignent.

4. Écrou de serrage (1) selon l'une des revendications 1 à 3, **caractérisé en ce qu'**au moins une première zone d'actionnement (35) est prévue au niveau de la surface interne (30), laquelle zone d'actionnement est réalisée pour le serrage et la rotation par complémentarité de forme de l'écrou de serrage (1).

5. Écrou de serrage (1) selon l'une des revendications 1 à 4, **caractérisé en ce qu'**au moins une deuxième zone d'actionnement est prévue au niveau de la bague (15), laquelle zone d'actionnement est réalisée pour la rotation par complémentarité de forme de la bague (15).
